(19) Europäisches Patentamt
European Patent Office
Office européen des brevets

(11) **EP 3 628 987 B1**

(12) **EUROPÄISCHE PATENTSCHRIFT**

(45) Veröffentlichungstag und Bekanntmachung des Hinweises auf die Patenterteilung:
**16.11.2022 Patentblatt 2022/46**

(21) Anmeldenummer: **19197429.4**

(22) Anmeldetag: **16.09.2019**

(51) Internationale Patentklassifikation (IPC):
**G01G 19/08** (2006.01)     **E02F 9/26** (2006.01)

(52) Gemeinsame Patentklassifikation (CPC):
**G01G 19/083; E02F 3/434; E02F 9/2029**

(54) **VERFAHREN ZUM AUSKIPPEN EINER NUTZLAST**

METHOD FOR TIPPING A PAYLOAD

PROCÉDÉ POUR DÉVERSER UNE CHARGE UTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2018 DE 102018216369**

(43) Veröffentlichungstag der Anmeldung:
**01.04.2020 Patentblatt 2020/14**

(73) Patentinhaber: **Deere & Company**
**Moline, IL 61265 (US)**

(72) Erfinder:
• **Stark, Sebastian**
**68163 Mannheim (DE)**
• **Ballaire, Frederic**
**68163 Mannheim (DE)**
• **Bechtold, Patrick**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**US-A1- 2014 336 874     US-A1- 2017 113 591**

**Beschreibung**

Die Erfindung betrifft ein Verfahren zum Auskippen einer Nutzlast aus einer Aufnahmeeinheit, welche an einer Hubvorrichtung einer Arbeitsmaschine angeordnet ist, wobei ein Auskipp-Vorgang in Abhängigkeit der Bedingung der Detektion einer während dieses Auskipp-Vorganges ausgekippten, vorbestimmten Zuladungs-Masse beendet wird, wobei während des Auskipp-Vorganges ein Kippwinkel der Aufnahmeeinheit relativ zu einer Bezugsgeraden in einer Auskipprichtung verändert wird.

In diesem Zusammenhang offenbart die US 2017/0113591 A1 ein System zur Durchführung eines Entladevorgangs, bei dem ein als Baggerschaufel ausgebildetes Werkzeug nach Maßgabe einer abzuladenden Nutzlast verschwenkt wird. Die abzuladende Nutzlast ergibt sich hierbei aus einem Vergleich zwischen einer aktuell in der Baggerschaufel befindlichen Nutzlast mit einem insofern vorgegebenen Schwellenwert. Ist der Schwellenwert erreicht, wird der Entladevorgang beendet.

Aus DE 10 2013 203 826 A1 ist eine Arbeitsmaschine mit einer Hubvorrichtung zum Heben und Senken einer Nutzlast bekannt. Dabei kann über eine Wiegeeinrichtung mittels einer Sensorik die Masse der Nutzlast kontinuierlich ermittelt werden.

Die Aufgabe der vorliegenden Erfindung ist es, die Funktionalität der Hubvorrichtung weiter zu verbessern.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 wird eine Nutzlast (z.B. ein Schüttgut) aus einer Aufnahmeeinheit (z.B. Schaufel) ausgeschüttet, insbesondere ausgekippt. Die Aufnahmeeinheit ist an einer Hubvorrichtung (z.B. Frontlader) einer Arbeitsmaschine angeordnet. Das Verfahren kann mehrere Auskipp-Vorgänge hintereinander oder einen einzigen Auskipp-Vorgang beinhalten. Während eines Auskipp-Vorganges kann die Nutzlast entweder vollständig oder nur anteilig bzw. teilweise aus der Aufnahmeeinheit ausgekippt werden. Zur Unterstützung eines anteiligen bzw. teilweise Auskippens der Nutzlast aus der Aufnahmeeinheit mit hoher Genauigkeit wird der Auskipp-Vorgang in Abhängigkeit der Bedingung der Detektion einer während des laufenden Auskipp-Vorganges ausgekippten und vorbestimmten Zuladungs-Masse $\Delta m\_zul$ beendet, wobei während des Auskipp-Vorganges ein Kippwinkel $w\_k$ der Aufnahmeeinheit relativ zu einer Bezugsgeraden in einer Auskipprichtung verändert wird. Dabei erfolgt die Veränderung des Kippwinkels $w\_k$ während des Auskipp-Vorganges jeweils nach Ablauf eines definierten Zeitintervalls.

Durch eine entsprechende Veränderung des Zeitintervalls kann die Genauigkeit des Auskipp-Vorgangs an die Anforderungen der jeweiligen Ladetätigkeit angepasst werden. Diese kontinuierliche Ermittlung und Einstellung aktueller Werte ermöglicht eine hohe Genauigkeit des Auskipp-Vorganges auch bei Nutzlasten mit komplexen Eigenschaften (z.B. klebrige Schüttgüter, Schüttgut mit mehreren gemischten Materialien).

Als zusätzliche Bedingung für die Beendigung des Auskipp-Vorgangs kann die Detektion einer vorbestimmten Rest-Masse $m\_re$ der in der Aufnahmeeinheit noch befindlichen Nutzlast L vorgesehen sein.

Mittels geeigneter technischer Mittel (z.B. einer geeigneten Wiegeeinrichtung an der Arbeitsmaschine) kann mathematisch und technisch einfach detektiert werden, ob und wann die vorbestimmte Zuladungs-Masse $m\_zul$ erreicht, d.h. ausgekippt ist, und ob gegebenenfalls zusätzlich die vorbestimmte Rest-Masse $m\_re$ erreicht ist. Hierdurch bietet das Verfahren eine automatische Auskipp- bzw. Schüttfunktion, mit deren Hilfe eine vorbestimmte Ziel-Gesamtmasse $m\_sum\text{-}ziel$ an einer Arbeits- oder Ladestelle automatisch und mit hoher Genauigkeit erreicht wird. Das Verfahren bietet somit eine vorteilhafte Assistenzfunktion bei Ladearbeiten der Arbeitsmaschine. Der Führer der Arbeitsmaschine wird während des Arbeitsvorganges signifikant entlastet.

Das Verfahren ermöglicht einen Auskipp-Vorgang, bei dem die Nutzlast mit hoher Masse-Genauigkeit nur anteilig, also teilweise aus der Aufnahmeeinheit ausgekippt werden soll.

Das Verfahren unterstützt insbesondere Ladearbeiten, bei denen hintereinander mehrere herkömmliche Auskipp-Vorgänge mit jeweils vollständigem Auskippen der Nutzlast aus der Aufnahmeeinheit erfolgen und der letzte Auskipp-Vorgang nur ein teilweises Auskippen der Nutzlast erfordert, um die vorbestimmte Ziel-Gesamtmasse $m\_sum\text{-}ziel$ an der Arbeits- oder Ladestelle möglichst exakt zu erreichen. In gleicher Weise ist das Verfahren vorteilhaft bei einer Ladearbeit bzw. Ladetätigkeit anwendbar, welche einen einzigen Auskipp-Vorgang mit nur anteiligem Auskippen der Nutzlast aus der Aufnahmeeinheit erfordert.

Ein direktes oder indirektes Detektieren der vorbestimmten Rest-Masse $m\_re$ beinhaltet auch die Möglichkeit, dass diese Masse $m\_re$ mit einer gewissen Ungenauigkeit gegenüber der tatsächlichen Masse der in der Aufnahmeeinheit noch befindlichen Nutzlast detektiert wird. Diese Ungenauigkeit entspricht einem Toleranzbereich, der unterschiedliche Einflussgrößen berücksichtigt wie beispielsweise Eigenschaften der Sensorik einer Wiegeeinrichtung für die Ermittlung einer Masse der Nutzlast, Größe der auszukippenden Zuladungs-Masse $m\_zul$, und Eigenschaften der Nutzlast. Analoges gilt für eine direkte oder indirekte Detektion der als ausgekippt geltenden, vorbestimmten Zuladungs-Masse $m\_zul$ bezüglich einer tatsächlich ausgekippten Masse.

Die Aufnahmeeinheit kann ein beliebiger Behälter zur Aufnahme einer Nutzlast sein. Die Aufnahmeeinheit ist auf geeignete Weise an der Hubvorrichtung fest oder beweglich fixiert. Beispielsweise ist die Aufnahmeeinheit als eine Schaufel an der Hubvorrichtung gelenkig angeordnet. In einem anderen Fall ist die Aufnahmeeinheit als eine Ladegabel ausgebildet oder die Aufnahmeeinheit ist an einer Ladegabel unbeweglich angeordnet. In einer weiteren Ausführungsform ist die Aufnahmeeinheit zangenartig ausgebildet (z.B. als Klemmzange).

Die Nutzlast kann ein beliebiges Schüttgut sein und unterschiedliche Aggregatzustände aufweisen. Beispielsweise handelt es sich bei der Nutzlast um eine Flüssigkeit, Saatgut, Tierfutter, Erdreich, Sand oder Steingemisch wie Schotter, Kies und dergleichen.

Die Nutzlast wird vorzugsweise an einer Arbeits- oder Ladestelle (z.B. an einem Anhänger oder einem Ladeplatz) ausgekippt.

Vorzugsweise wird unmittelbar vor dem betrachteten Auskipp-Vorgang und/oder während des betrachteten Auskipp-Vorganges eine Masse der in der Aufnahmeeinheit befindlichen Nutzlast ermittelt.

Die Masse der Nutzlast in der Aufnahmeeinheit wird insbesondere mittels einer geeigneten Wiegeeinrichtung an der Arbeitsmaschine ermittelt. Hierbei findet beispielsweise das aus DE 10 2013 203 826 A1 bekannte Verfahren zum Wiegen einer Nutzlast Anwendung.

Die unmittelbar vor dem Start des Auskipp-Vorganges vorhandene und ermittelte Masse der Nutzlast in der Aufnahmeeinheit kann als eine Start-Masse m_st bezeichnet werden. Sie entspricht einer aktuellen Masse m_akt der Nutzlast in der Aufnahmeeinheit unmittelbar vor dem Start des Auskipp-Vorganges. Während des Auskipp-Vorganges kann die aktuelle Masse m_akt der in der Aufnahmeeinheit befindlichen Nutzlast einmalig oder mehrfach, z.B. kontinuierlich oder in bestimmten Zeitabständen, ermittelt werden. Der Führer der Arbeitsmaschine, ein Nutzer oder ein elektronisches Steuersystem der Arbeitsmaschine können über die aktuelle Masse m_akt regelmäßig informiert werden.

Die Ermittlung der Start-Masse m_st und/oder der aktuellen Masse m_akt ermöglicht es, mathematisch und technisch einfach zu detektieren, ob und wann die vorbestimmte Zuladungs-Masse m_zul und gegebenenfalls die vorbestimmte Rest-Masse m_re erreicht ist.

Die ermittelte Start-Masse m_st kann mit der vorbestimmten Zuladungs-Masse m_zul verglichen werden. Dieser Vergleich bietet eine steuerungstechnisch einfache Maßnahme für eine Feststellung, ob die unmittelbar vor einem Auskipp-Vorgang in der Aufnahmeeinheit befindliche Nutzlast vollständig oder nur anteilig ausgekippt werden soll. Wenn m_st ≤ m_zul festgestellt wird, kann die Nutzlast vollständig ausgekippt werden und der Auskipp-Vorgang ist beendet. In diesem Fall ist eine Detektion der ausgekippten Zuladungs-Masse m_zul und gegebenenfalls der Rest-Masse m_re nicht zwingend erforderlich, um eine Beendigung des Auskipp-Vorganges einzuleiten.

Die Rest-Masse m_re lässt sich verfahrenstechnisch einfach vorbestimmen, wenn vorher die Start-Masse m_st der vor dem Auskipp-Vorgang in der Aufnahmeeinheit befindlichen Nutzlast bekannt ist. Diese Start-Masse m_st entspricht der aktuellen Masse m_akt der Nutzlast unmittelbar vor oder zum Start des Auskipp-Vorganges und kann deshalb technisch einfach mit denselben technischen Mitteln (z.B. einer Wiegeeinrichtung) ermittelt werden, mit der auch während des Auskipp-Vorganges die aktuelle Masse m_akt ermittelt wird.

Weiterhin wird die Rest-Masse m_re vorzugsweise in Abhängigkeit von der vorbestimmten Zuladungs-Masse m_zul vorbestimmt. Beispielsweise kann die Rest-Masse m_re verhältnismäßig exakt durch die Gleichung

$$m\_re = m\_st - m\_zul$$

vorbestimmt werden.

In einer bevorzugten Ausführungsform wird die aktuelle Masse m_akt der in der Aufnahmeeinheit befindlichen Nutzlast mit der vorbestimmten Rest-Masse m_re verglichen, bevor der Auskipp-Vorgang beendet wird. Dieser Vergleich bzw. das Vergleichsergebnis bietet ein steuertechnisch einfaches Kriterium, um während des Auskipp-Vorganges zum optimalen Zeitpunkt dessen Beendigung einzuleiten. Um die Genauigkeit des Verfahrensablaufes zu unterstützen, wird die aktuelle Masse m_akt vorzugsweise in definierten oder konstanten Zeitintervallen ermittelt und dann jeweils mit der vorbestimmten Rest-Masse m_re verglichen.

In einer bevorzugten Ausführungsform weist die Hubvorrichtung einen Ausleger auf, welcher um eine erste Schwenkachse relativ zur Arbeitsmaschine schwenkbar gelagert ist. Dabei ist die Aufnahmeeinheit um eine zweite Schwenkachse relativ zum Ausleger schwenkbar gelagert. In diesem Fall kann die aktuelle Masse m_akt während des Auskipp-Vorganges oder beim Start des Auskipp-Vorganges (Start-Masse m_st) mit technisch einfachen Hilfsmitteln ermittelt werden, indem beispielsweise standardmäßig zur Verfügung stehende Sensormittel und geeignete Algorithmen verwendet werden. Dabei erfolgt die Ermittlung bzw. Berechnung der Masse insbesondere in Abhängigkeit von mindestens einer der folgenden Größen: einer Masse des Auslegers, einer Masse der Aufnahmeeinheit, einem Drehmoment um die erste Schwenkachse, einem Drehmoment um die zweite Schwenkachse, einem Schwerpunkt der Masse des Auslegers bezüglich der ersten Schwenkachse, einem Schwerpunkt der Masse der Aufnahmeeinheit bezüglich der zweiten Schwenkachse. Die vorgenannten Drehmomente wiederum werden vorzugsweise ermittelt, indem Aktuatorenkräfte (insbesondere Zylinderkräfte) an dem Ausleger berücksichtigt werden. Diese Kräfte können beispielsweise über Drucksensoren ermittelt werden.

In einer weiteren bevorzugten Ausführungsform wird das Erreichen der vorbestimmten Zuladungs-Masse m_zul und gegebenenfalls der vorbestimmten Rest-Masse m_re indirekt in Abhängigkeit von einem Soll-Wert w_soll detektiert. Während des Auskipp-Vorganges muss die Aufnahmeeinheit hinsichtlich ihres Kippwinkels w_k dann lediglich auf den Wert w_k = w_soll eingestellt werden. Dies reduziert die Zeitdauer des Auskipp-Vorganges selbst und unterstützt einen zeiteffizienten Verfahrensablauf.

Um den Verfahrensablauf bei Verwendung eines Soll-Wertes w_soll des Kippwinkels w_k technisch einfach und anwendungsfreundlich zu halten, wird der Soll-Wert w_soll vorzugsweise anhand von bereitgestellten Kalibrierdaten abgeleitet und festgelegt.

Um die Kalibrierdaten verfahrenstechnisch besonders einfach nutzen zu können, repräsentieren sie vorzugsweise ein Verhältnis zwischen einer Masse der Nutzlast und einem Kippwinkel der Aufnahmeeinheit relativ zu einer Bezugsgeraden. Dabei wird insbesondere die aktuelle Masse m_akt der Nutzlast in der Aufnahmeeinheit bei unterschiedlichen Kippwinkeln w_k aufgenommen und als Kalibrierdaten gespeichert. Dies ermöglicht beim Arbeitsbetrieb eine einfache Umrechnung von einer gewünschten Zuladungs-Masse m_zul und gegebenenfalls Rest-Masse m_re auf einen Soll-Wert des Kippwinkels w_k.

Die Kalibrierdaten können als Kalibrierdiagramm (z.B. Tabelle oder Kurve) gespeichert werden. Vorzugsweise werden für spezifische Materialien als Nutzlast bzw. Schüttgut jeweils spezifische Kalibrierdaten erstellt. Abgesehen von der spezifischen Art der Nutzlast können bei den Kalibrierdaten auch weitere Merkmale berücksichtigt werden, wie beispielsweise Partikelgeometrien, Temperatur, Feuchtigkeit der Nutzlast, eine Haltedauer des Kippwinkels w_k = w_soll.

Die Kalibrierung kann zeitlich unabhängig von der unmittelbar bevorstehenden Ladetätigkeit erfolgen und die Kalibrierdaten können dann bei Bedarf - z.B. aus einer entsprechenden Materialdatenbank - abgerufen werden. Alternativ können Kalibrierdaten in einem Kalibriervorgang unmittelbar vor der geplanten Ladetätigkeit mit der auszukippenden Nutzlast erstellt und abgespeichert werden. Hierdurch können charakteristische Merkmale der Nutzlast aktuell und exakt in den Kalibrierdaten berücksichtigt werden.

Die Kalibrierung beinhaltet vorzugsweise eine Aufnahme mehrerer Wertepaare. Zwischenwerte können gegebenenfalls durch Interpolation generiert werden. Auf diese Weise kann die aktuelle Masse m_akt der Nutzlast in der Aufnahmeeinheit als Funktion des Kippwinkels w_k der Aufnahmeeinheit dargestellt werden.

Während des Auskipp-Vorgangs wird vorzugsweise mindestens ein Rüttel-Vorgang durchgeführt. Hierdurch wird erreicht, dass sich die Nutzlast auch bei klebrigen Eigenschaften zuverlässig von der Aufnahmeeinheit lösen kann. Dies wiederum unterstützt das Erreichen der vorbestimmten Rest-Masse m_re in der Aufnahmeeinheit mit hoher Genauigkeit und kurzer Verfahrensdauer. Bei jedem Rüttel-Vorgang wird die Aufnahmeeinheit zumindest einmal entgegen der Auskipprichtung und danach in Auskipprichtung gekippt. Die hierbei angefahrenen Kippwinkel w_k können für den jeweiligen Rüttel-Vorgang vorgegeben sein oder individuell eingestellt werden.

Vorzugsweise wird zum Beenden oder während des Beendens des Auskipp-Vorgangs die Aufnahmeeinheit entgegen der Auskipprichtung gekippt. Hierdurch ist gewährleistet, dass bei einer detektierten Restmasse m_re in der Aufnahmeeinheit tatsächlich auch kein weiterer Anteil der Nutzlast ausgekippt wird.

Während des Auskipp-Vorganges ist es vorteilhaft, dem Benutzer oder Fahrzeugführer relevante Informationen bezüglich des Ladevorganges zu signalisieren, um ihn während des Ladevorganges weiter zu entlasten. Die Signalisierung erfolgt vorzugsweise über eine geeignete elektronische Einheit, beispielsweise ein Display zum Lesen und/oder Eingeben von Daten. Dabei können einzelne Daten von einer Steuereinheit oder von dem Benutzer bzw. Fahrzeugführer vorgegeben werden. Dies betrifft beispielsweise eine Ziel-Gesamtmasse m_sum_ziel der an einer Ladestelle (vorzugsweise durch mehrere nacheinander erfolgende Auskipp-Vorgänge) auszukippenden Nutzlast, die vorbestimmte Zuladungs-Masse m_zul und gegebenenfalls die vorbestimmte Rest-Masse m re.

Vorzugsweise werden mindestens eine, insbesondere sämtliche, der folgenden Größen signalisiert:

- die aktuelle Masse m_akt der in der Aufnahmeeinheit befindlichen Nutzlast,
- eine aktuelle Gesamtmasse m_sum_akt der an einer Ladestelle (vorzugsweise durch unmittelbar vorangegangene Auskipp-Vorgänge) bereits ausgekippten Menge der Nutzlast,
- die bereits genannte Ziel-Gesamtmasse m_sum_ziel der an einer Ladestelle (vorzugsweise durch mehrere zeitlich hintereinander erfolgende Auskipp-Vorgänge) auszukippenden Menge der Nutzlast,
- eine Differenz Δm_sum zwischen der Ziel-Gesamtmasse m_sum_ziel und der aktuellen Gesamtmasse m_sum_akt,
- eine Anzahl n_KV bereits durchgeführter Auskipp-Vorgänge, wobei diese Anzahl n_KV eine aktuelle Gesamtmasse m_sum_akt der an einer Ladestelle bereits ausgekippten Nutzlast repräsentiert,
- ein spezifisches Merkmal spez_L der Nutzlast, z.B. die Art, Typ oder Material der Nutzlast.

Die Arbeitsmaschine ist insbesondere als ein Nutzfahrzeug ausgebildet. Als Nutzfahrzeuge kommen vorzugsweise Traktoren, Schlepper, Baumaschinen, Radlader, Bagger, Schaufelbagger, Telehandler, Auskippdrohnen in Frage.

Abhängig vom Typ oder der Funktionalität der jeweiligen Arbeitsmaschine kann die Hubvorrichtung zwischen der Arbeitsmaschine und der Aufnahmeeinheit ein einziges, in sich starres Auslegerteil aufweisen oder alternativ mehrere, miteinander beweglich verbundene Auslegerteile aufweisen.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1     eine schematische, blockschaltbildartige Darstellung einer Arbeitsmaschine mit einer Steuereinheit zur Durchführung des Verfahrens,

Fig. 2     eine schematische Darstellung der Hubvorrichtung,

Fig. 3     ein Flussdiagramm des erfindungsgemäßen Verfahrens in einer ersten Ausführungsform,

Fig. 4     ein Flussdiagramm des erfindungsgemäßen Verfahrens in einer weiteren Ausführungsform, und

Fig. 5     ein Flussdiagramm mit weiteren Verfahrensschritten zur Anwendung bei den Verfahrensabläufen gemäß Fig. 3 und Fig. 4.

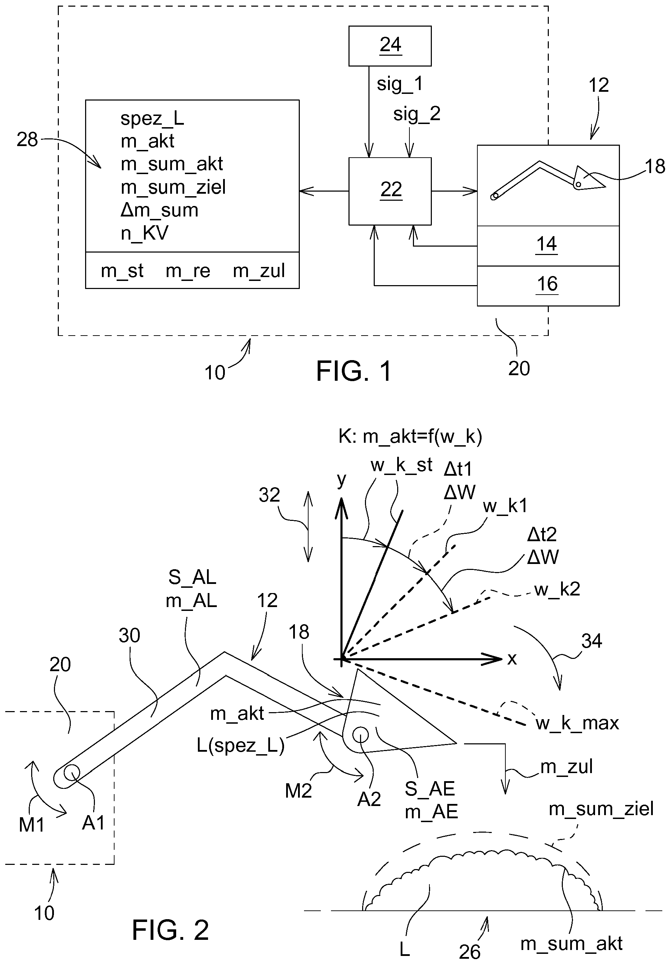

Fig. 1 zeigt schematisch einzelne Bestandteile einer Arbeitsmaschine 10 in Form eines Traktors oder Schleppers mit einer daran angeordneten Hubvorrichtung 12 in Form eines Frontladers. Die Arbeitsmaschine 10 weist eine geeignete Sensorik 14 und eine Wiegeeinrichtung 16 auf. Die Wiegeeinrichtung 16 kann eine in einer als Schaufel ausgebildeten Aufnahmeeinheit 18 befindliche Nutzlast L wiegen.

Die Sensorik 14 umfasst beispielsweise verschiedene Beschleunigungssensoren und Drucksensoren, welche an der Hubvorrichtung 12 und/oder an einer Tragstruktur 20 der Arbeitsmaschine 10 angeordnet sein können. Die Sensorik 14 kann z.B. nach Art der Sensoreinrichtung gemäß DE 10 2013 203 826 A1 ausgebildet sein. Die Wiegeeinrichtung 16 kann in einer Ausführungsform ebenfalls nach Art der Wiegeeinrichtung gemäß DE 10 2013 203 826 A1 ausgebildet und funktionell wirksam sein.

Signale bzw. Daten der Sensorik 14 und der Wiegeeinrichtung 16 werden an eine elektronische Steuereinheit 22 der Arbeitsmaschine 10 gesendet. In einer hier nicht dargestellten, weiteren Ausführungsform ist die Wiegeeinrichtung 16 Bestandteil der Steuereinheit 22. Die Steuereinheit 22 steuert die Hubvorrichtung 12 und/oder deren Aufnahmeeinheit 18 an, um ein Auskippen der Nutzlast L aus der Aufnahmeeinheit 18 in der noch zu beschreibenden Weise zu ermöglichen.

An die Steuereinheit 22 ist eine Eingabeeinheit 24 angeschlossen. Letztere ist beispielsweise als Tastatur oder Display ausgebildet und dient der Eingabe (z.B. manuell, per Sprache) von Daten durch einen Benutzer oder Führer der Arbeitsmaschine 10. Die Eingabeeinheit 24 sendet die eingegebenen Daten als Signale sig_1 an die Steuereinheit 22. Weiterhin kann die Steuereinheit 22 Signale sig_2 empfangen. Diese Signale sig_2 repräsentieren Daten eines Informationssystems (z.B. CAN-Bus, CANFD-Bus, Ethernet, EtherCAT, LIN-Bus, FlexRay-Bus, IIC, UART) der Arbeitsmaschine 10 und ggf. weitere Daten, welche unabhängig von individuellen Dateneingaben des Benutzers oder Führers der Arbeitsmaschine 10 zur Verfügung stehen.

Beispielsweise erhält die Steuereinheit 22 mittels der Signale sig_1 und/oder sig_2 Informationen über die Art der Nutzlast L (z.B. Erdreich, Kies, spezifische Flüssigkeit, etc.) oder über eine Ziel-Gesamtmasse m_sum_ziel der Nutzlast L, welche an einer Ladestelle 26 ausgekippt werden soll. Die Ziel-Gesamtmasse m_sum_ziel kann auch von einer maximal zulässigen Zuladung abhängig sein, welche der Steuereinheit 22 über die Signale sig_1 und/oder sig_2 mitgeteilt wird.

Weiterhin gibt die Steuereinheit 22 Daten an eine Anzeigeeinheit 28 aus. Mittels der Anzeigeeinheit 28 kann der Benutzer oder Führer der Arbeitsmaschine 10 über den Verlauf der Ladetätigkeit an der Ladestelle 26 informiert werden. Beispielsweise signalisiert die Anzeigeeinheit 28 folgende Informationen:

-    ein spezifisches Unterscheidungsmerkmal spez_L zwischen unterschiedlichen Nutzlasten L, z.B. die Art, Typ oder Material der Nutzlast L,
-    eine aktuelle Masse m_akt der in der Aufnahmeeinheit 18 aktuell befindlichen Nutzlast L,
-    eine aktuelle Gesamtmasse m_sum_akt der an der Ladestelle 26 bereits ausgekippten Nutzlast L,
-    die Ziel-Gesamtmasse m_sum_ziel der an der Ladestelle 26 auszukippenden Nutzlast L,
-    eine Differenz Δm_sum zwischen der Ziel-Gesamtmasse m_sum_ziel und der aktuellen Gesamtmasse m_sum_akt, und
-    eine Anzahl n_KV bereits durchgeführter Auskipp-Vorgänge, wobei diese Anzahl n_KV die aktuelle Gesamtmasse m_sum_akt der an der Ladestelle 26 bereits ausgekippten Nutzlast L repräsentiert.

In Fig. 2 ist an der Ladestelle 26 die aktuelle Gesamtmasse m_sum_akt schematisch mit einer durchgezogenen Linie angedeutet, während die Ziel-Gesamtmasse m_sum_ziel mit einer gestrichelten Linie angedeutet ist.

Sofern die Ladetätigkeit an der Ladestelle 26 für dieselbe Nutzlast mehrere Auskipp-Vorgänge nacheinander erfordert, entspricht die Differenz Δm_sum bei dem letzten Auskipp-Vorgang einer durch eben diese Differenz vorbestimmten Zuladungs-Masse m_zul. Diese vorbestimmte Zuladungs-Masse m_zul der Nutzlast L soll bei dem letzten Auskipp-Vorgang möglichst genau ausgekippt werden, um ein Überschreiten der Ziel-Gesamtmasse m_sum_ziel an der Ladestelle 26 zu vermeiden. Analoges gilt, wenn nur ein einziger Auskipp-Vorgang benötigt wird. Dann ist dieser einzige Auskipp-Vorgang auch gleichzeitig der letzte Auskipp-Vorgang.

In einer Ausführungsform der Anzeigeeinheit 28 können auch die erwähnte Zuladungs-Masse $m\_zul$, eine noch zu beschreibende Start-Masse $m\_st$ in der Aufnahmeeinheit 18 und eine ebenfalls noch zu beschreibende Rest-Masse $m\_re$ in der Aufnahmeeinheit 18 signalisiert werden.

Ungeachtet von der in Fig. 1 getrennt dargestellten Eingabeeinheit 24 und Anzeigeeinheit 28 können diese beiden Einheiten in einer weiteren Ausführungsform in einer einzigen Vorrichtung zusammengefasst sein.

Fig. 2 zeigt schematisch die an der Arbeitsmaschine 10 angeordnete Hubvorrichtung 12. Letztere weist einen Ausleger 30 auf, der um eine erste Schwenkachse A1 relativ zur Arbeitsmaschine 10 schwenkbar gelagert ist. Die Aufnahmeeinheit 18 ist um eine zweite Schwenkachse A2 relativ zum Ausleger 30 schwenkbar gelagert.

Verschiedene physikalische Merkmale des Auslegers 30 und der Aufnahmeeinheit 18 können genutzt werden, um eine Masse der Nutzlast L in der Aufnahmeeinheit 18 zu ermitteln. Die Start-Masse $m\_st$ bzw. die aktuelle Masse $m\_akt$ können beispielsweise mittels der Sensorik 14 und bereitgestellter Algorithmen (z.B. basierend auf DE 10 2013 203 826 A1) in Abhängigkeit von den folgenden Größen ermittelt werden:

eine Masse $m\_AL$ des Auslegers 30 und dessen Schwerpunkt $S\_AL$ bezüglich der ersten Schwenkachse A1, eine Masse $m\_AE$ der Aufnahmeeinheit 18 und deren Schwerpunkt $S\_AE$ bezüglich der zweiten Schwenkachse A2, ein Drehmoment M1 um die erste Schwenkachse A1, ein Drehmoment M2 um die zweite Schwenkachse A2.

Die bewegliche Schwenklagerung der Aufnahmeeinheit 18 um die Schwenkachse A2 ermöglicht unterschiedliche Kippwinkel $w\_k$ der Aufnahmeeinheit 18 relativ zu einer Vertikalen 32, welche als eine Bezugsgerade für einen sich verändernden Kippwinkel $w\_k$ wirkt. Die Bezugsgerade entspricht der y-Achse des angedeuteten x/y-Koordinatensystems. Andere Bezugsgeraden sind denkbar, z.B. eine Horizontale, welche der x-Achse des vorgenannten Koordinatensystems entsprechen würde.

Während eines Auskipp-Vorganges wird der Kippwinkel $w\_k$ in einer Auskipprichtung 34 verändert und dadurch schrittweise größer. Vorzugsweise wird dabei der Kippwinkel $w\_k$ nach Ablauf eines definierten Zeitintervalls schrittweise neu eingestellt, wie anhand der Zeitintervalle $\Delta t1$ und $\Delta t2$, der Winkeländerungen $\Delta w$ sowie der veränderten Kippwinkel $w\_k1$ und $w\_k2$ in dem x/y-Koordinatensystem beispielhaft dargestellt. Vorzugsweise wird zu Beginn des Auskipp-Vorgangs der Kippwinkel $w\_k$ als ein Startwinkel $w\_k\_st$ relativ zu der verwendeten Bezugsgeraden (hier: vertikale y-Achse) definiert eingestellt. Diese Einstellung kann automatisch über registrierte Daten durch die Steuereinheit 22 erfolgen. Ausgehend vom Startwinkel $w\_k\_st$ ist vorzugsweise auch eine maximale Winkelveränderung definiert, um ein automatisiertes Beenden des Auskipp-Vorgangs auszulösen. Bei der gewählten Bezugsgeraden in Fig. 2 handelt es sich um einen maximalen Kippwinkel $w\_k\_max$, dessen detektiertes Erreichen oder Überschreiten ein Beenden des Auskipp-Vorgangs auslöst. Bei dem maximalen Kippwinkel $w\_k\_max$ ist die Aufnahmeeinheit 18 weit nach unten in Richtung der Ladestelle 26 geöffnet. Dennoch ist der maximale Kippwinkel $w\_k\_max$ insbesondere derart eingestellt, dass zwischen ihm und dem mechanischen Endanschlag der Aufnahmeeinheit 18 noch ein Bewegungsspielraum existiert.

In einer bevorzugten Ausführungsform des Verfahrens greift die Steuereinheit 22 auf abgespeicherte Kalibrierdaten zu, welche ein Verhältnis zwischen einer Masse der Nutzlast L in der Aufnahmeeinheit 18 und einem entsprechenden Kippwinkel $w\_k$ der Aufnahmeeinheit 18 repräsentieren. Insbesondere handelt es sich bei den abgespeicherten Kalibrierdaten um die aktuelle Masse $m\_akt$ einer spezifischen Nutzlast L in der Aufnahmeeinheit 18 als Funktion des Kippwinkels $w\_k$, also $m\_akt = f(w\_k)$. Die Kalibrierdaten werden vorzugsweise als eine Kennlinie K oder eine Tabelle bereitgestellt. Für unterschiedliche Nutzlasten L mit unterschiedlichen spezifischen Merkmalen $spez\_L$ werden üblicherweise unterschiedliche Kennlinien K bzw. Tabellen bereitgestellt.

Die Kalibrierdaten können in der Steuereinheit 22 der Arbeitsmaschine 10 abgespeichert sein oder beispielsweise über den Eingang $sig\_2$ der Steuereinheit 22 mitgeteilt werden.

Die Steuereinheit 22 ist derart ausgestaltet, dass sie sämtliche Daten, Signale, etc. empfängt und sendet, die zur Durchführung eines Auskipp-Vorganges erforderlich sind. Insbesondere steuert die Steuereinheit 22 die Hubvorrichtung 12 und deren Aufnahmeeinheit 18 an. Hierzu werden beispielsweise Hydraulikzylinder an der Hubvorrichtung 12 betrieben.

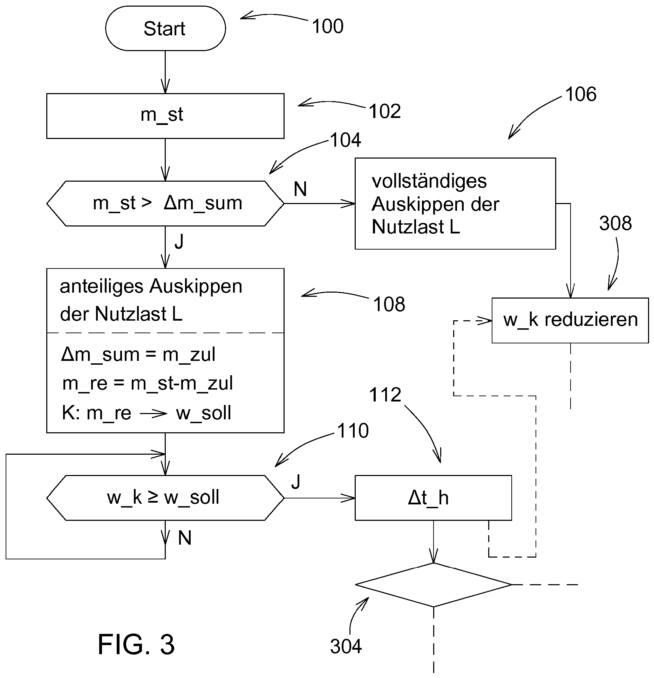

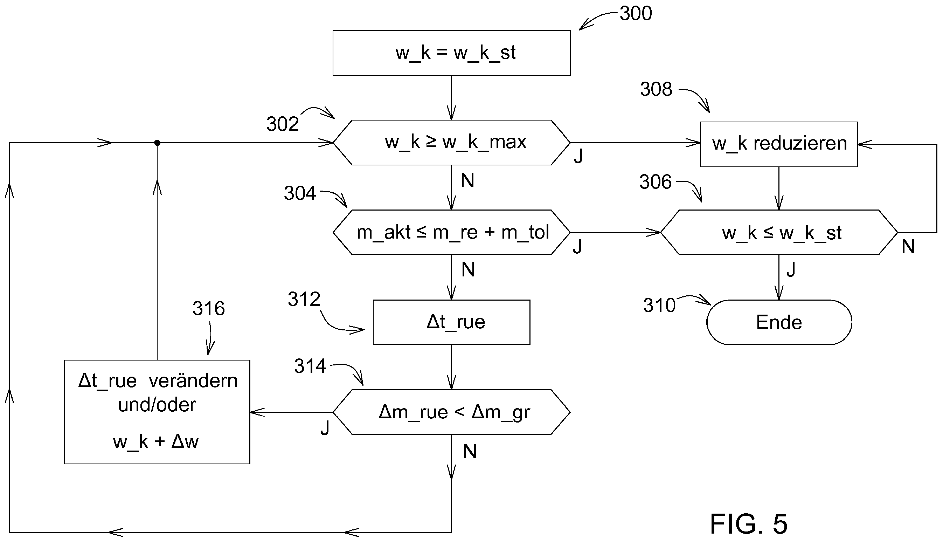

Fig. 3 zeigt den Ablauf eines Auskipp-Vorganges in einer ersten Ausführungsform. Nach dem Startschritt 100 wird im Schritt 102 die aktuelle Masse $m\_akt$ der Nutzlast L in der Aufnahmeeinheit 18 ermittelt. Diese Masse der Nutzlast L entspricht deren Start-Masse $m\_st$ unmittelbar vor Beginn des Auskippens. Im Schritt 104 wird die Start-Masse $m\_st$ mit der Differenz $\Delta m\_sum$ zwischen der Ziel-Gesamtmasse $m\_sum\_ziel$ und der aktuellen Gesamtmasse $m\_sum\_akt$ verglichen. Wenn die Start-Masse $m\_st$ nicht größer als die Differenz $\Delta m\_sum$ ist, kann die Nutzlast L während des aktuellen Auskipp-Vorganges vollständig aus der Aufnahmeeinheit 18 ausgekippt werden (Schritt 106). Danach können weitere Verfahrensschritte - insbesondere ein Schritt 308 und ein Schritt 306 gemäß Fig. 5 - erfolgen, um den Kippwinkel $w\_k$ in Richtung des Startwinkels $w\_k\_st$ zu überführen und den Auskipp-Vorgang zu beenden.

Falls die Start-Masse $m\_st$ größer ist als die Differenz $\Delta m\_sum$, soll die Nutzlast L nur anteilig, nämlich möglichst genau in Höhe der dieser Differenz Δm_sum entsprechenden Masse ausgekippt werden. Somit ist die bei diesem Auskipp-Vorgang auszukippende Zuladungs-Masse m_zul als die Differenz Δm_sum vorbestimmt (Schritt 108). Bei diesem Auskipp-Vorgang handelt es sich vorzugsweise um den letzten Auskipp-Vorgang einer Ladetätigkeit, bei dem - im Gegensatz zu den vorangegangenen Auskipp-Vorgängen mit vollständigem Auskippen - nur noch ein anteiliges Auskippen der Nutzlast L aus der Aufnahmeeinheit 18 erfolgen soll, um die Ziel-Gesamtmasse an der Ladestelle 26 möglichst genau zu erreichen.

Ebenfalls im Schritt 108 wird die in der Aufnahmeeinheit 18 zu verbleibende Rest-Masse m_re durch die Gleichung m_re = m_st - m_zul vorbestimmt. Aus den abgespeicherten Kalibrierdaten bzw. der Kennlinie K kann der Soll-Wert w_soll des Kippwinkels w_k vorbestimmt werden, welcher der Rest-Masse m_re in der Aufnahmeeinheit 18 entspricht (Schritt 108).

Mittels der Steuereinheit 22 wird der Kippwinkel w_k der Aufnahmeeinheit 18 solange verstellt, bis der vorbestimmte Soll-Wert w_soll erreicht oder überschritten ist (Schritt 110). Wird das Erreichen oder Überscheiten des Soll-Wertes w_soll festgestellt bzw. detektiert, entspricht dies einer indirekten Detektion der vorbestimmten Rest-Masse m_re.

Nach Ablauf einer definierten Haltezeit Δt_h für den eingestellten Soll-Wert w_soll (Schritt 112) kann in einer Verfahrensvariante der Kippwinkel w_k in Richtung des Startwinkels w_k_st zurückgeführt werden, um den Auskipp-Vorgang zu beenden. Diese Variante ist nach dem Schritt 112 als gestrichelter Pfeil in Richtung des Schrittes 308 angedeutet.

Bei einer alternativen Verfahrensvariante wird nach Ablauf der Haltezeit Δt_h in einem Schritt 304 gemäß Fig. 5 geprüft, ob bei diesem Auskipp-Vorgang auch tatsächlich die vorbestimmte Rest-Masse m_re gegebenenfalls mit einer berücksichtigten Toleranz in Form einer Toleranz-Masse m_tol (z.B. 20 kg) in der Aufnahmeeinheit 18 erreicht oder unterschritten worden ist. Falls ja, wird der Kippwinkel w_k in Richtung des Startwinkels w_k_st zurückgeführt und der Auskipp-Vorgang beendet (Schritte 306, 308, 310).

Falls bei dem Schritt 304 die vorbestimmte Rest-Masse m_re einschließlich berücksichtigter Toleranz in der Aufnahmeeinheit 18 noch nicht erreicht ist, wird in einem Schritt 312 ein Rüttel-Vorgang während einer definierten Rüttelzeitdauer Δt_rue durchgeführt. Hierbei wird die Aufnahmeeinheit 18 - abhängig von der Rüttelzeitdauer Δt_rue einmal oder mehrmals - entgegen der Auskipprichtung 34 und in Auskipprichtung 34 bewegt, um weitere Masse der Nutzlast L aus der Aufnahmeeinheit 18 auszukippen. In einem Folgeschritt 314 wird die mittels des Rüttel-Vorgangs ausgekippte Rüttel-Masse Δm_rue mit einem definierten Masse-Grenzwert Δm_gr verglichen.

Falls im Schritt 314 festgestellt wird, dass die Rüttel-Masse Δm_rue den Masse-Grenzwert Δm_gr erreicht oder überschritten hat, kann bei Durchlaufen der Schritte 302 und 304 erneut geprüft werden, ob noch weitere Masse der Nutzlast L aus der Aufnahmeeinheit 18 ausgekippt werden soll oder ob der Auskipp-Vorgang beendet werden kann (Schritte 306, 308, 310). Falls im Schritt 314 die Rüttel-Masse Δm_rue den Masse-Grenzwert Δm_gr unterschritten hat, werden im Schritt 316 weitere Maßnahmen veranlasst, nämlich die Rüttelzeitdauer Δt_rue verändert und/oder der Kippwinkel w_k vergrößert. Welche Maßnahme mit welchen physikalischen Parametern durchgeführt wird, kann von der ermittelten Differenz zwischen den beiden Werten Rüttel-Masse Δm_rue und Masse-Grenzwert Δm_gr abhängig sein. Danach werden - sofern der maximale Kippwinkel w_k_max noch nicht erreicht ist - die Schritte 302 und 304 erneut durchlaufen. Somit wird erneut geprüft, ob noch weitere Masse der Nutzlast L aus der Aufnahmeeinheit 18 ausgekippt werden soll oder ob der Auskipp-Vorgang beendet werden kann (Schritte 306, 308, 310).

Insbesondere bei einer Nutzlast L mit komplexen Eigenschaften (z.B. klebrig, zähfließend) mit nicht exakt wiederholbarem Auskippverhalten kann es vorteilhaft sein, zur Erhöhung der Genauigkeit des Auskipp-Vorganges das durchgeführte Auskippen der vorbestimmten Zuladungs-Masse m_zul sowie das Erreichen der vorbestimmten Rest-Masse m_re nicht indirekt zu detektieren, wie anhand der Schritte 108, 110 gemäß Fig. 3 beschrieben.

Vielmehr kann alternativ zu dem Ablauf gemäß Fig. 3 auf Kalibrierdaten bzw. Kennlinien K verzichtet werden. Das durchgeführte Auskippen der vorbestimmten Zuladungs-Masse m_zul sowie das Erreichen der vorbestimmten Rest-Masse m_re während eines Auskipp-Vorganges wird direkt detektiert, indem während dieses Auskipp-Vorganges die aktuelle Masse m_akt der in der Aufnahmeeinheit 18 befindlichen Nutzlast L ermittelt wird. Vorzugsweise wird die aktuelle Masse m_akt während des Auskipp-Vorganges mehrfach, insbesondere kontinuierlich nach Ablauf bestimmter Zeitintervalle ermittelt. Hierbei können beispielsweise die Zeitintervalle Δt1 und Δt2 für die schrittweise Verstellung des Kippwinkels w_k verwendet werden.

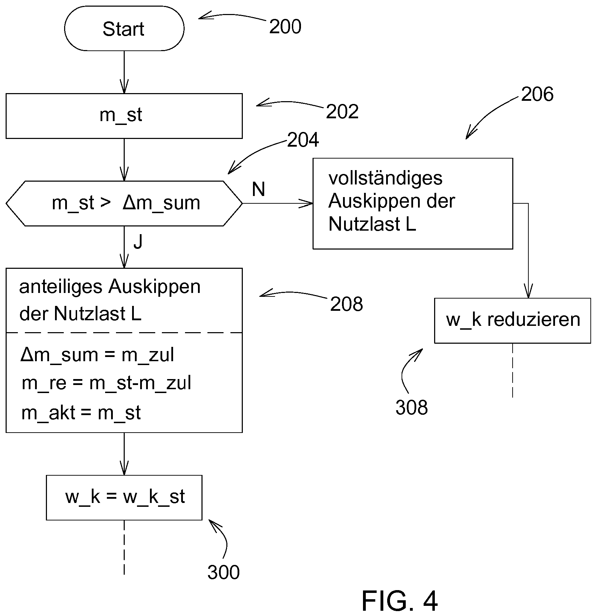

In Fig. 4 und 5 ist der Ablauf eines Auskipp-Vorganges dargestellt, bei dem das Erreichen der vorbestimmten Rest-Masse m_re direkt, d.h. ohne Kalibrierdaten bzw. Kennlinien K, detektiert wird. Nach dem Startschritt 200 wird im Schritt 202 die aktuelle Masse m_akt der Nutzlast L in der Aufnahmeeinheit 18 ermittelt. Diese Masse der Nutzlast L entspricht deren Start-Masse m_st unmittelbar vor Beginn des Auskippens. Im Schritt 204 wird die Start-Masse m_st mit der Differenz Δm_sum zwischen der Ziel-Gesamtmasse m_sum_ziel und der aktuellen Gesamtmasse m_sum_akt verglichen. Wenn die Start-Masse m_st nicht größer als die Differenz Δm_sum ist, kann die Nutzlast L während des aktuellen Auskipp-Vorganges vollständig aus der Aufnahmeeinheit 18 ausgekippt werden (Schritt 206). Danach können weitere Verfahrensschritte - insbesondere die Schritte 308 und 306 gemäß Fig. 5 - erfolgen, um den Kippwinkel w_k in Richtung des Startwinkels w_k_st zu überführen und den Auskipp-Vorgang zu beenden.

Falls die Start-Masse m_st größer ist als die Differenz Δm_sum, soll die Nutzlast L nur anteilig, nämlich möglichst genau in Höhe der dieser Differenz Δm_sum entsprechenden Masse ausgekippt werden. Somit ist die bei diesem Auskipp-Vorgang auszukippende Zuladungs-Masse m_zul als die Differenz Δm_sum vorbestimmt (Schritt 208). Bei diesem Auskipp-Vorgang handelt es sich vorzugsweise um den letzten Auskipp-Vorgang einer Ladetätigkeit, bei dem - im Gegensatz zu den vorangegangenen Auskipp-Vorgängen mit vollständigem Auskippen - nur noch ein anteiliges Auskippen der Nutzlast L aus der Aufnahmeeinheit 18 erfolgen soll, um die Ziel-Gesamtmasse an der Ladestelle 26 möglichst genau zu erreichen.

Ebenfalls im Schritt 208 wird die in der Aufnahmeeinheit 18 zu verbleibende Rest-Masse m_re durch die Gleichung

$$m\_re = m\_st - m\_zul$$

vorbestimmt.

Unmittelbar vor dem Auskippen entspricht die ermittelte aktuelle Masse m_akt in der Aufnahmeeinheit 18 der Start-Masse m_st (Schritte 202, 208).

Bis zu einer Vorbestimmung der auszukippenden Zuladungs-Masse m_zul und einer Vorbestimmung der in der Aufnahmeeinheit 18 zu verbleibenden Rest-Masse m_re ist der Verfahrensablauf bei der Ausführungsform gemäß Fig. 4 prinzipiell gleich wie bei der Variante gemäß Fig. 3. Bei dem Verfahren gemäß Fig. 4 wird jedoch nicht ein vorbestimmter Soll-Wert w_soll des Kippwinkels w_k angefahren. Vielmehr wird der Kippwinkel w_k der Aufnahmeeinheit 18 zunächst auf den definierten Startwinkel w_k_st eingestellt (Schritt 300). Ausgehend davon wird der aktuelle Kippwinkel w_k schrittweise und in Abhängigkeit der durchgeführten und bereits erläuterten Schritte 302, 304, 312, 314, 316 vergrößert. Dabei wird der jeweils aktuelle Kippwinkel w_k der Aufnahmeeinheit 18 in Auskipprichtung 34 verändert (Schritt 316), damit ein weiterer Anteil der Nutzlast L aus der Aufnahmeeinheit 18 ausgekippt werden kann. Bei der gewählten Bezugsgeraden (Vertikale 32) und dem verwendeten x/y-Koordinatensystem gemäß Fig. 2 bedeutet dies, dass der aktuelle Kippwinkel w_k um einen definierten Winkelbetrag Δw vergrößert wird und dann beispielsweise w_k1 oder w_k2 beträgt. Bei anders gewählten Bezugssystemen kann der Verfahrensschritt an dieser Stelle eine Verkleinerung des aktuellen Kippwinkels w_k um einen definierten Winkelbetrag Δw erfordern.

Aufgrund der Schritte 304, 312, 314, 316 wird die während des Auskippens kontinuierlich (z.B. jeweils nach Ablauf eines Zeitintervalls Δt1, Δt2) ermittelte aktuelle Masse m_akt in der Aufnahmeeinheit 18 immer kleiner, bis im Schritt 304 festgestellt wird, dass die aktuelle Masse m_akt kleiner oder gleich der vorbestimmten Rest-Masse m_re einschließlich der Toleranz-Masse m_tol ist. Dann soll der Auskipp-Vorgang beendet werden. Hierzu wird in Schritt 308 die Aufnahmeeinheit 18 entgegen der Auskipprichtung 34 gekippt. Sofern in Schritt 316 eine Vergrößerung des aktuellen Kippwinkels w_k erfolgt war, bedeutet dies in Schritt 308, dass der zuletzt aktuelle Kippwinkel w_k um einen definierten Winkelbetrag Δw verkleinert wird. Die Winkelbeträge Δw in den Schritten 316 und 308 können identisch oder unterschiedlich sein.

Unabhängig davon, ob der Auskipp-Vorgang gemäß Fig. 3, Fig. 4 bzw. 5 oder einer anderen Ausführungsform erfolgt, kann ein störungsfreies Ausrieseln der Nutzlast L aus der Aufnahmeeinheit 18 unterstützt werden, indem während des Auskippens mindestens ein Rüttel-Vorgang durchgeführt wird, bei dem die Aufnahmeeinheit 18 zumindest einmal entgegen der Auskipprichtung 34 und danach wieder in Auskipprichtung 34 gekippt wird.

Es sei darauf hingewiesen, dass einzelne Details der in den Zeichnungen dargestellten Merkmale zumindest teilweise nicht maßstäblich sind.

**Patentansprüche**

1. Verfahren zum Auskippen einer Nutzlast (L) aus einer Aufnahmeeinheit (18), welche an einer Hubvorrichtung (12) einer Arbeitsmaschine (10) angeordnet ist, wobei ein Auskipp-Vorgang in Abhängigkeit der Bedingung der Detektion einer während dieses Auskipp-Vorganges ausgekippten, vorbestimmten Zuladungs-Masse (m_zul) beendet wird, wobei während des Auskipp-Vorganges ein Kippwinkel (w_k) der Aufnahmeeinheit (18) relativ zu einer Bezugsgeraden (32) in einer Auskipprichtung (34) verändert wird, **dadurch gekennzeichnet, dass** die Veränderung des Kippwinkels (w_k) während des Auskipp-Vorganges jeweils nach Ablauf eines definierten Zeitintervalls (Δt1, Δt2) erfolgt.

2. Verfahren nach Anspruch 1, **dadurch gekennzeichnet, dass** der Auskipp-Vorgang in Abhängigkeit der zusätzlichen Bedingung der Detektion einer vorbestimmten Rest-Masse (m_re) der in der Aufnahmeeinheit (18) noch befindlichen Nutzlast (L) beendet wird.

3. Verfahren nach Anspruch 1 oder 2, **dadurch gekennzeichnet, dass** eine Masse der Nutzlast (L) ermittelt wird

   - als eine Start-Masse (m_st) der in der Aufnahmeeinheit (18) befindlichen Nutzlast (L) vor dem Auskipp-Vorgang, und/oder
   - als eine aktuelle Masse (m_akt) der während des Auskipp-Vorganges in der Aufnahmeeinheit (18) befindlichen Nutzlast (L).

4. Verfahren nach Anspruch 2 und 3, **dadurch gekennzeichnet, dass** die Rest-Masse (m_re) in Abhängigkeit von der ermittelten Start-Masse (m_st) vorbestimmt wird.

5. Verfahren nach Anspruch 2 oder 4, **dadurch gekennzeichnet, dass** die Rest-Masse (m_re) in Abhängigkeit von der vorbestimmten Zuladungs-Masse (m_zul) vorbestimmt wird.

6. Verfahren nach Anspruch 2 und 3, **dadurch gekennzeichnet, dass** vor dem Beenden des Auskipp-Vorganges die aktuelle Masse (m_akt) der in der Aufnahmeeinheit (18) befindlichen Nutzlast (L) mit der vorbestimmten Rest-Masse (m_re) verglichen wird.

7. Verfahren nach einem der vorhergehenden Ansprüche, **dadurch gekennzeichnet,**

  - **dass** die Hubvorrichtung (12) einen Ausleger (30) aufweist, welcher um eine erste Schwenkachse (A1) relativ zur Arbeitsmaschine (10) schwenkbar gelagert ist,
  - **dass** die Aufnahmeeinheit (18) um eine zweite Schwenkachse (A2) relativ zum Ausleger (30) schwenkbar gelagert ist, und
  - **dass** die Masse (m_akt, m_st) der in der Aufnahmeeinheit (18) befindlichen Nutzlast (L) in Abhängigkeit von mindestens einer der folgenden Größen ermittelt wird:

    -- eine Masse (m_AL) des Auslegers (30),
    -- eine Masse (m_AE) der Aufnahmeeinheit (18),
    -- ein Drehmoment (M1) um die erste Schwenkachse (A1),
    -- ein Drehmoment (M2) um die zweite Schwenkachse (A2),
    -- ein Schwerpunkt (S_AL) der Masse (m_AL) des Auslegers (30) bezüglich der ersten Schwenkachse (A1), und
    -- ein Schwerpunkt (S_AE) der Masse (m_AE) der Aufnahmeeinheit (18) bezüglich der zweiten Schwenkachse (A2).

8. Verfahren nach Anspruch 3 oder 7, **dadurch gekennzeichnet, dass** die Ermittlung der aktuellen Masse (m_akt) jeweils nach Ablauf eines definierten Zeitintervalls ($\Delta$t1, $\Delta$t2) erfolgt.

9. Verfahren nach Anspruch 2, **dadurch gekennzeichnet, dass** die vorbestimmte Zuladungs-Masse (m_zul) und die vorbestimmte Rest-Masse (m_re) in Abhängigkeit von einem während des Auskipp-Vorganges erreichten Soll-Wert (w_soll) des Kippwinkels (w_k) der Aufnahmeeinheit (18) detektiert wird.

10. Verfahren nach Anspruch 9, **dadurch gekennzeichnet, dass** der Soll-Wert (w_soll) des Kippwinkels (w_k) von bereitgestellten Kalibrierdaten (K) abgeleitet wird.

11. Verfahren nach Anspruch 10, **dadurch gekennzeichnet, dass** Kalibrierdaten (K) ein Verhältnis zwischen einer Masse (m_akt) der Nutzlast (L) und einem Kippwinkel (w_k) der Aufnahmeeinheit (18) relativ zu einer Bezugsgeraden (32) repräsentieren.

12. Verfahren nach einem der vorhergehenden Ansprüche, **dadurch gekennzeichnet, dass** während des Auskipp-Vorganges mindestens ein Rüttel-Vorgang durchgeführt wird, bei dem die Aufnahmeeinheit (18) zumindest einmal entgegen der Auskipprichtung (34) und in Auskipprichtung (34) gekippt wird.

13. Verfahren nach einem der vorhergehenden Ansprüche, **dadurch gekennzeichnet, dass** zum Beenden oder während des Beendens des Auskipp-Vorgangs die Aufnahmeeinheit (18) entgegen der Auskipprichtung (34) gekippt wird.

14. Verfahren nach einem der vorhergehenden Ansprüche, **dadurch gekennzeichnet, dass** während des Auskipp-Vorganges mindestens eine der folgenden Größen signalisiert wird:

  - eine aktuelle Masse (m_akt) der in der Aufnahmeeinheit (18) befindlichen Nutzlast (L),
  - eine aktuelle Gesamtmasse (m_sum_akt) der an einer Ladestelle (26) bereits ausgekippten Nutzlast (L),
  - eine Ziel-Gesamtmasse (m_sum_ziel) der an einer Ladestelle (26) auszukippenden Nutzlast (L),
  - eine Differenz ($\Delta$m_sum, m_zul) zwischen der Ziel-Gesamtmasse (m_sum_ziel) und der aktuellen Gesamtmasse (m_sum_akt) an einer Ladestelle (26),
  - eine Anzahl (n_KV) bereits durchgeführter Auskipp-Vorgänge, welche einer aktuellen Gesamtmasse (m_sum_akt) der an einer Ladestelle (26) bereits ausgekippten Nutzlast (L) entspricht,
  - ein spezifisches Merkmal (spez_L) der Nutzlast (L).

**Claims**

1. Method for tipping out a cargo load (L) from a reception unit (18), which is arranged on a lifting device (12) of a work machine (10), wherein a tipping-out process is ended as a function of the condition of the detection of a predetermined loading mass (m_zul) tipped out during this tipping-out process, wherein, during the tipping-out process, a tipping angle (w_k) of the reception unit (18) relative to a reference straight line (32) in a tipping-out direction (34) is modified, **characterized in that** the modification of the tipping angle (w_k) during the tipping-out process is respectively carried out after a defined time interval ($\Delta t1$, $\Delta t2$) has elapsed.

2. Method according to Claim 1, **characterized in that** the tipping-out process is ended as a function of the additional condition of the detection of a predetermined residual mass (m_re) of the cargo load (L) still contained in the reception unit (18).

3. Method according to Claim 1 or 2, **characterized in that** a mass of the cargo load (L) is determined

   - as an initial mass (m_st) of the cargo load (L) contained in the reception unit (18) before the tipping-out process, and/or
   - as a current mass (m_akt) of the cargo load (L) contained in the reception unit (18) during the tipping-out process.

4. Method according to Claims 2 and 3, **characterized in that** the residual mass (m_re) is predetermined as a function of the determined initial mass (m_st).

5. Method according to Claim 2 or 4, **characterized in that** the residual mass (m_re) is predetermined as a function of the predetermined loading mass (m_zul).

6. Method according to Claims 2 and 3, **characterized in that**, before the end of the tipping-out process, the current mass (m_akt) of the cargo load (L) contained in the reception unit (18) is compared with the predetermined residual mass (m_re).

7. Method according to one of the preceding claims, **characterized**

   - **in that** the lifting device (12) comprises a boom (30) which is mounted tiltably about a first tilt axis (A1) relative to the work machine (10),
   - **in that** the reception unit (18) is mounted tiltably about a second tilt axis (A2) relative to the boom (30), and
   - **in that** the mass (m_akt, m_st) of the cargo load (L) contained in the reception unit (18) is determined as a function of at least one of the following quantities:

     -- a mass (m_AL) of the boom (30),
     -- a mass (m_AE) of the reception unit (18),
     -- a torque (M1) about the first tilt axis (A1),

     -- a torque (M2) about the second tilt axis (A2),
     -- a centroid (S_AL) of the mass (m_AL) of the boom (30) with respect to the first tilt axis (A1), and
     -- a centroid (S_AE) of the mass (m_AE) of the reception unit (18) with respect to the second tilt axis (A2).

8. Method according to Claim 3 or 7, **characterized in that** the determination of the current mass (m_akt) is respectively carried out after a defined time interval ($\Delta t1$, $\Delta t2$) has elapsed.

9. Method according to Claim 2, **characterized in that** the predetermined loading mass (m zul) and the predetermined residual mass (m_re) are detected as a function of a setpoint value (w_soll), reached during the tipping-out process, of the tipping angle (w_k) of the reception unit (18).

10. Method according to Claim 9, **characterized in that** the setpoint value (w_soll) of the tipping angle (w_k) is derived from provided calibration data (K).

11. Method according to Claim 10, **characterized in that** calibration data (K) represent a ratio between a mass (m_akt) of the cargo load (L) and a tipping angle (w_k) of the reception unit (18) relative to a reference straight line (32).

12. Method according to one of the preceding claims, **characterized in that**, during the tipping-out process, at least one shaking process is carried out, during which the reception unit (18) is tipped at least once counter to the tipping-out direction (34) and in the tipping-out direction (34).

13. Method according to one of the preceding claims, **characterized in that**, at the end or during the ending of the tipping-out process, the reception unit (18) is tipped counter to the tipping-out direction (34).

14. Method according to one of the preceding claims, **characterized in that**, during the tipping-out process, at least one of the following quantities is signalled:

    - a current mass (m_akt) of the cargo load (L) contained in the reception unit (18),
    - a current total mass (m_sum_akt) of the cargo load (L) already tipped out at a loading site (26),
    - a target total mass (m_sum_ziel) of the cargo load (L) to be tipped out at a loading site (26),
    - a difference ($\Delta m\_sum$, m_zul) between the target total mass (m_sum_ziel) and the current total mass (m_sum_akt) at a loading site (26),
    - a number (n_KV) of tipping-out processes already carried out, which corresponds to a current total mass ($m\_sum\_akt$) of the cargo load (L) already tipped out at a loading site (26),
- a specific feature ($spez\_L$) of the cargo load (L).

## Revendications

1. Procédé pour déverser une charge utile (L) à partir d'une unité de réception (18), laquelle est disposée sur un dispositif de levage (12) d'une machine de travail (10), une opération de déversement étant finie en fonction de la condition de détection d'une masse de charge prédéfinie ($m\_zul$) déversée pendant cette opération de déversement, un angle d'inclinaison ($w\_k$) de l'unité de réception (18) par rapport à une droite de référence (32) dans un sens de déversement (34) étant modifié pendant l'opération de déversement, **caractérisé en ce que** la modification de l'angle d'inclinaison ($w\_k$) pendant l'opération de déversement s'effectue respectivement après expiration d'un intervalle de temps défini ($\Delta t1$, $\Delta t2$).

2. Procédé selon la revendication 1, **caractérisé en ce que** l'opération de déversement est finie en fonction de la condition supplémentaire de détection d'une masse résiduelle prédéfinie ($m\_re$) de la charge utile (L) se trouvant encore dans l'unité de réception (18).

3. Procédé selon la revendication 1 ou 2, **caractérisé en ce qu'**une masse de la charge utile (L) est déterminée

    - en tant que masse initiale ($m\_st$) de la charge utile (L) se trouvant dans l'unité de réception (18) avant l'opération de déversement, et/ou
    - en tant que masse actuelle ($m\_akt$) de la charge utile (L) se trouvant dans l'unité de réception (18) pendant l'opération de déversement.

4. Procédé selon les revendications 2 et 3, **caractérisé en ce que** la masse résiduelle ($m\_re$) est prédéfinie en fonction de la masse initiale déterminée ($m\_st$).

5. Procédé selon la revendication 2 ou 4, **caractérisé en ce que** la masse résiduelle ($m\_re$) est prédéfinie en fonction de la masse de charge prédéfinie ($m\_zul$).

6. Procédé selon les revendications 2 et 3, **caractérisé en ce qu'**avant la fin de l'opération de déversement, la masse actuelle ($m\_akt$) de la charge utile (L) se trouvant dans l'unité de réception (18) est comparée avec la masse résiduelle prédéfinie ($m\_re$).

7. Procédé selon l'une des revendications précédentes, **caractérisé
tes,**

- **en ce que** le dispositif de levage (12) présente une flèche (30), laquelle est montée pivotante par rapport à la machine de travail (10) autour d'un premier axe de pivotement (A1),
- **en ce que** l'unité de réception (18) est montée pivotante par rapport à la flèche (30) autour d'un deuxième axe de pivotement (A2), et
- **en ce que** la masse ($m\_akt$, $m\_st$) de la charge utile (L) se trouvant dans l'unité de réception (18) est déterminée en fonction d'au moins l'une des grandeurs suivantes :

    -- une masse ($m\_AL$) de la flèche (30),
    -- une masse ($m\_AE$) de l'unité de réception (18),
    -- un couple (MI) autour du premier axe de pivotement (AI),
    -- un couple (M2) autour du deuxième axe de pivotement (A2),
    -- un centre de gravité ($S\_AL$) de la masse ($m\_AL$) de la flèche (30) par rapport au premier axe de pivotement (A1), et
    -- un centre de gravité ($S\_AE$) de la masse ($m\_AE$) de l'unité de réception (18) par rapport au deuxième axe de pivotement (A2).

8. Procédé selon la revendication 3 ou 7, **caractérisé en ce que** la détermination de la masse actuelle ($m\_akt$) s'effectue respectivement après expiration d'un intervalle de temps défini ($\Delta t1$, $\Delta t2$).

9. Procédé selon la revendication 2, **caractérisé en ce que** la masse de charge prédéfinie ($m\_zul$) et la masse résiduelle prédéfinie ($m\_re$) sont détectées en fonction d'une valeur de consigne ($w\_soll$), atteinte pendant l'opération de déversement, de l'angle d'inclinaison ($w\_k$) de l'unité de réception (18).

10. Procédé selon la revendication 9, **caractérisé en ce que** la valeur de consigne ($w\_soll$) de l'angle d'inclinaison ($w\_k$) est dérivée de données d'étalonnage (K) fournies.

11. Procédé selon la revendication 10, **caractérisé en ce que** les données d'étalonnage (K) représentent un rapport entre une masse ($m\_akt$) de la charge utile (L) et un angle d'inclinaison ($w\_k$) de l'unité de réception (18) par rapport à une droite de référence (32).

12. Procédé selon l'une des revendications précédentes, **caractérisé en ce que**, pendant l'opération de déversement, au moins une opération de secousses est effectuée, lors de laquelle l'unité de réception (18) est basculée au moins une fois en sens inverse du sens de déversement (34) et dans le sens de déversement (34).

**13.** Procédé selon l'une des revendications précédentes, **caractérisé en ce que**, pour la fin ou pendant la fin de l'opération de déversement, l'unité de réception (18) est basculée en sens inverse du sens de déversement (34).

**14.** Procédé selon l'une des revendications précédentes, **caractérisé en ce que**, pendant l'opération de déversement, au moins l'une des grandeurs suivantes est signalée :

> - une masse actuelle (m_akt) de la charge utile (L) se trouvant dans l'unité de réception (18),
> - une masse totale actuelle (m_sum_akt) de la charge utile (L) déjà déversée en un emplacement de chargement (26),
> - une masse totale cible (m_sum_ziel) de la charge utile (L) à déverser en un emplacement de chargement (26),
> - une différence (Δm_sum, m_zul) entre la masse totale cible (m_sum_ziel) et la masse totale actuelle (m_sum_akt) en un emplacement de chargement (26),
> - un nombre (n_KV) d'opérations de déversement déjà effectuées, lequel correspond à une masse totale actuelle (m_sum_akt) de la charge utile (L) déjà déversée en un emplacement de chargement (26),
> - une caractéristique spécifique (spez_L) de la charge utile (L).

FIG. 1

FIG. 2

Start ⟵ 100

m_st ⟵ 102

⟵ 104

m_st > Δm_sum —N→ vollständiges Auskippen der Nutzlast L ⟵ 106

J

anteiliges Auskippen der Nutzlast L ⟵ 108

Δm_sum = m_zul
m_re = m_st-m_zul
K: m_re ⇢ w_soll

w_k reduzieren ⟵ 308

⟵ 110

w_k ≥ w_soll —J→ Δt_h ⟵ 112

N

304

FIG. 3

Start — 200

m_st — 202

m_st > Δm_sum — 204

N → vollständiges Auskippen der Nutzlast L — 206

J

anteiliges Auskippen der Nutzlast L — 208

Δm_sum = m_zul
m_re = m_st-m_zul
m_akt = m_st

w_k reduzieren

308

w_k = w_k_st

300

FIG. 4

FIG. 5

**EP 3 628 987 B1**

**IN DER BESCHREIBUNG AUFGEFÜHRTE DOKUMENTE**

**In der Beschreibung aufgeführte Patentdokumente**

- US 20170113591 A1

- DE 102013203826 A1